# EUROPÄISCHE PATENTSCHRIFT

(11) **EP 2 641 934 B1**
(45) Veröffentlichungstag und Bekanntmachung des Hinweises auf die Patenterteilung: **10.09.2014**
(21) Anmeldenummer: 12160125.6
(22) Anmeldetag: 19.03.2012
(51) Int. Cl.: C08K 5/56

(54) **Siliconzusammensetzung mit verbesserten mechanischen Eigenschaften**
Silicon composition with improved mechanical properties
Composition de silicone ayant des propriétés mécaniques améliorées

(43) Veröffentlichungstag der Anmeldung: 25.09.2013
(73) Patentinhaber: Sika Technology AG, 6340 Baar (CH)
(72) Erfinder: Friedel, Manuel, 8048 Zürich (CH); Böttiger, Michael, 8964 Rudolfstetten (CH)
(74) Vertreter: Sika Patent Attorneys

(56) Entgegenhaltungen:
- EP-A2- 0 649 879

## Beschreibung

### Technisches Gebiet

Die vorliegende Erfindung betrifft das Gebiet der Siliconzusammensetzungen, wie sie insbesondere als Kleb- und Dichtstoffe eingesetzt werden.

### Stand der Technik

Siliconzusammensetzungen sind schon seit längerem bekannt und werden insbesondere als Kleb- und Dichtstoffe in unterschiedlichen Anwendungen eingesetzt. Weit verbreitet sind dabei sowohl einkomponentige, feuchtigkeitshärtende Siliconzusammensetzungen als auch bei Raumtemperatur vernetzende, zweikomponentige Siliconzusammensetzungen.

Da Siliconzusammensetzungen oftmals im Baubereich eingesetzt werden, müssen sie hinsichtlich ihrer Eigenschaften, insbesondere der mechanischen Eigenschaften, besondere Vorschriften erfüllen. Beispielweise werden in der Schweiz solche Vorschriften vom Bundesamt für Bevölkerungsschutz erlassen. Unter anderem sind dabei auch gewisse Anforderungen an den Weiterreisswiderstand von Siliconzusammensetzung gestellt, wobei bekannt ist, dass gerade Siliconzusammensetzungen relativ niedrige Weiterreisswiderstände aufweisen.

EP0649879 offenbart Siliconzusammensetzungen, welche eine spezifische Füllstoffkombination aus mit Hexamethyldisilazan oberflächenmodifizierter Fällungskieselsäure und mit Stearat beschichtetem gefälltem Calciumcarbonat sowie einen Zinnkatalysator enthalten. Durch den Einsatz dieser sehr spezifischen Füllstoffe, kann der Weiterreisswiderstand der Siliconzusammensetzung verbessert werden.

Der Nachteil von Zusammensetzungen gemäss EP0649879 liegt darin, dass diese spezifischen Füllstoffe aufwendig herzustellen und somit teuer sind.

### Darstellung der Erfindung

Aufgabe der vorliegenden Erfindung ist es daher, eine Siliconzusammensetzung mit verbessertem Weiterreisswiderstand bereitzustellen, welche auch mit gängigen kostengünstigen Füllstoffen realisierbar ist.

Überraschenderweise wurde gefunden, dass Siliconzusammensetzungen gemäss Anspruch 1 diese Aufgabe lösen.
Durch den Einsatz eines Katalysator- oder Beschleunigersystems aus einer zinnorganischen Verbindung sowie aus mindestens einem Komplex eines Elements ausgewählt aus den Gruppen 4, 10, 12, 13 und 15 des Periodensystems der Elemente, ist es möglich, den Weiterreisswiderstand der Siliconzusammensetzung unter Verwendung einer Füllstoffkombination aus mindestens einer Kieselsäure mit einer BET-Oberfläche von 50 bis 300 m²/g sowie aus mindestens eine Kreide mit einer BET-Oberfläche von 10 bis 25 m²/g und einer mittleren Teilchengrösse d50 von 10 bis 1000 nm zu verbessern. Die eingesetzten Füllstoffe müssen dabei nicht in aufwendigen Verfahren vorbehandelt oder beschichtet werden.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft eine Siliconzusammensetzung umfassend
- mindestens ein additions- oder kondensationsvernetzbares Polydiorganosiloxan mit einer Viskosität von 10 bis 500'000 mPa·s bei einer Temperatur von 23°C,
- mindestens einen Vernetzer für das Polydiorganosiloxan,
- mindestens eine zinnorganische Verbindung,
- mindestens einen Komplex eines Elements ausgewählt aus den Gruppen 4, 10, 12, 13 und 15 des Periodensystems der Elemente,
- mindestens eine Kieselsäure mit einer BET-Oberfläche von 50 bis 300 m²/g, sowie
- mindestens eine Kreide mit einer BET-Oberfläche von 10 bis 25 m²/g und einer mittleren Teilchengrösse d50 von 10 bis 1000 nm.

Mit "Poly" beginnende Substanznamen wie beispielsweise Polyol bezeichnen im vorliegenden Dokument Substanzen, die formal zwei oder mehr der in ihrem Namen vorkommenden funktionellen Gruppen pro Molekül enthalten.
Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Das Polydiorganosiloxan in der erfindungsgemässen Siliconzusammensetzung ist insbesondere ein vinylterminiertes Polydiorganosiloxan oder ein Polydiorganosiloxan **P** der Formel (I).

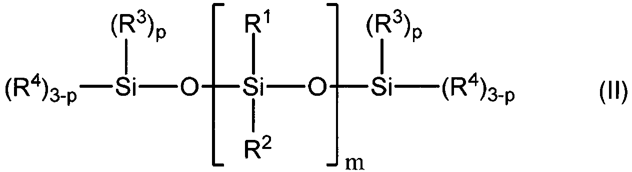

Dabei stehen die Reste R¹, R² und R³ unabhängig voneinander für lineare oder verzweigte, einwertige Kohlenwasserstoffreste mit 1 bis 12 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.

Insbesondere stehen die Reste R¹ und R² für Alkylreste mit 1 bis 5, insbesondere mit 1 bis 3, C-Atomen, bevorzugt für Methylgruppen. Die Reste R³ stehen unabhängig voneinander insbesondere für Phenyl-, Vinyl oder für Methylgruppen.
Die Reste R⁴ stehen unabhängig voneinander für Hydroxylgruppen oder für Alkoxy-, Acetoxy- oder Ketoximgruppen mit jeweils 1 bis 13 C-Atomen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen.
Der Index p steht für einen Wert von 0, 1 oder 2, insbesondere für 0 oder 1. Weiterhin ist der Index m so gewählt, dass das Polydiorganosiloxan **P** bei einer Temperatur von 23°C eine Viskosität von 10 bis 500'000 mPa·s, insbesondere von 1000 bis 250'000 mPa·s aufweist.

Bevorzugt ist das Polydiorganosiloxan ein kondensationsvernetzbares Polydiorganosiloxan.

Stehen die Reste R⁴ für Ketoximgruppen, handelt es sich vorzugsweise um Ketoximgruppen mit jeweils 1 bis 13 C-Atomen und der Index p steht insbesondere für einen Wert von 0.
Bevorzugte Ketoximgruppen sind dabei Dialkylketoximgruppen deren Alkylgruppen jeweils 1 bis 6 C-Atome aufweisen. Vorzugsweise stehen die beiden Alkylgruppen der Dialkylketoximgruppen unabhängig voneinander für Methyl-, Ethyl-, n-Propyl-, iso-Propyl-, n-Butyl- oder iso-Butylgruppen. Besonders bevorzugt sind diejenigen Fälle, in denen eine Alkylgruppe des Dialkylketoxims für eine Methylgruppe steht und die andere Alkylgruppe des Dialkylketoxims für eine Methyl-, Ethyl- oder für eine iso-Butylgruppe steht. Meist bevorzugt steht die Ketoximgruppe für eine Ethyl-methylketoximgruppe.

Bevorzugt stehen die Reste R⁴ für Hydroxylgruppen und der Index p für einen Wert von 2.

Geeignete Polydiorganosiloxane, wie sie insbesondere in Formel (I) dargestellt sind, sind bekannt und kommerziell erhältlich. Auch die Herstellung derartiger Polydiorganosiloxane erfolgt in bekannter Art und Weise, wie beispielsweise beschrieben in US 4,962,152.

Weiterhin umfasst die vorliegende Zusammensetzung mindestens einen Vernetzer für das Polydiorganosiloxan.

Handelt es sich beim Polydiorganosiloxan um ein additionsvernetzbares Polydiorganosiloxan, insbesondere um ein vinylterminiertes Polydiorganosiloxan, ist der Vernetzer für das Polydiorganosiloxan ein Hydrosiloxan, ein Derivat davon oder eine Mischung aus mehreren Hydrosiloxanen oder -derivaten, wobei der Vernetzer im Mittel mindestens zwei SiH-Gruppen pro Molekül aufweist. Geeignete Hydrosiloxane weisen zwischen 0.01 mmol/g und 2 mol/g H-Atome auf bezogen auf das Gewicht des Hydrosiloxans. Desweiteren besitzen geeignete Hydrosiloxane eine Viskosität von zwischen 0.1 mPa·s und 150'000 mPa·s bei 25°C.
Besonders geeignete Vernetzer sind Verbindungen der Formel (II)

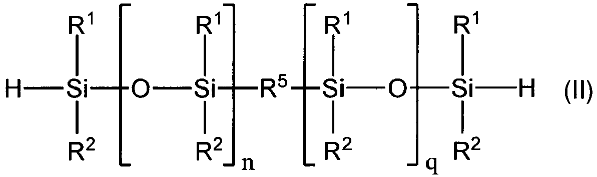

Die Reste R¹ und R² sind dabei vorhergehend beschrieben worden.
Der Rest R⁵ steht für ein Sauerstoffatom oder für einen einwertigen Kohlenwasserstoffrest mit 1 bis 30 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.
n und q stehen unabhängig voneinander für Werte von 0 bis 20.
Besonders geeignete Vernetzer sind ausgewählt aus der Gruppe bestehend aus Poly(dimethylsiloxan-co-methylhydrosiloxan),
Tris(dimethylsilyloxy)phenylsilan, Bis(dimethylsilyloxy)diphenylsilan, Polyphenyl(dimethylhydrosiloxy)siloxan, Methylhydrosiloxanphenylmethylsiloxan-Copolymer, Methylhydrosiloxan-alkylmethylsiloxan-Copolymer, Polyalkylhydrosiloxan, Methylhydrosiloxan-diphenylsiloxanalkylmethylsiloxan-Copolymer, Polyphenylmethylsiloxanmethylhydrosiloxan, sowie der zyklischen Vertreter wie Tetramethylcyclotetrasiloxan und Pentamethylcyclopentasiloxan.

Handelt es sich beim Polydiorganosiloxan um ein kondensationsvernetzbares Polydiorganosiloxan, insbesondere um ein Polydiorganosiloxan **P** der Formel (I) wie vorhergehend beschrieben, ist der Vernetzer für das Polydiorganosiloxan insbesondere ein Silan der Formel (III).

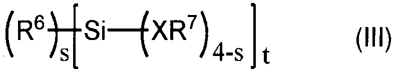

Dabei steht der Rest R⁶ unabhängig voneinander für einen linearen oder verzweigten, Kohlenwasserstoffrest mit 1 bis 12 C-Atomen, welcher gegebenenfalls ein oder mehrere Heteroatome, und gegebenenfalls eine oder mehrere C-C-Mehrfachbindungen und/oder gegebenenfalls cycloaliphatische und/oder aromatische Anteile aufweist.
X steht für ein Heteroatom, insbesondere für O oder N. Ist X gleich N, so trägt dieses N neben R⁷ zusätzlich ein Wasserstoffatom oder eine Alkylgruppe, insbesondere eine Alkylgruppe mit 1 bis 5, insbesondere mit 1 bis 3, C-Atomen, bevorzugt eine Methylgruppe. Der Rest R⁷ steht unabhängig voneinander für ein Wasserstoffatom, oder für einen Alkylrest mit 1 bis 12 C-Atomen, oder für einen Ketiminrest mit 1 bis 13 C-Atomen, oder für einen Acylrest mit 1 bis 12 C-Atomen. Insbesondere steht der Rest R⁷ für einen Alkylrest mit 1 bis 5, insbesondere 1 bis 3, C-Atomen, bevorzugt für eine Methyl- oder Ethylgruppe.
Der Index s steht für einen Wert von 0 bis 4, wobei falls s für einen Wert von 3 oder 4 steht, mindestens s-2 Reste R⁶ jeweils mindestens eine mit den reaktiven Gruppen des Polydiorganosiloxans **P** reaktive, insbesondere kondensierbare, Gruppe, also beispielsweise eine Hydroxylgruppe aufweisen. Insbesondere steht s für einen Wert von 0, 1 oder 2, bevorzugt für einen Wert von 1. Der Index t steht für einen Wert von 1, 2 oder 3, insbesondere 1 oder 2. Für die Wahl des Silans der Formel (III) als Vernetzer für Polydiorganosiloxane können unterschiedliche Anforderungen an die Siliconzusammensetzung ausschlaggebend sein. Einerseits spielt die Reaktivität des Silans eine wichtige Rolle, wobei grundsätzlich höherreaktive Silane bevorzugt werden. Andererseits können auch toxikologische Gründe für die Wahl des Vernetzers ausschlaggebend sein. Beispielsweise ist deshalb Tetraethoxysilan als Vernetzer gegenüber Tetramethoxysilan bevorzugt.

Beispiele geeigneter Silane der Formel (III) sind Methyltrimethoxysilan, Chlormethyltrimethoxysilan, Ethyltrimethoxysilan, Propyltrimethoxysilan, Vinyltrimethoxysilan, Methyltriethoxysilan, Vinyltriethoxysilan, Phenyltriethoxysilan, Methyltripropoxysilan, Phenyltripropoxysilan, Tetramethoxysilan, Tetraethoxysilan, Tetra-n-propoxysilan, Tetra-n-butoxysilan, 2-Aminoethyl-3-aminopropyltrimethoxysilan, 2-Aminoethyl-3-aminopropyltriethoxysilan, N-Phenylaminomethyltrimethoxysilan, 3-Glycidoxypropyltrimethoxysilan, Bis-(N-methylacetamido)methylethoxysilan, Tris-(methylethylketoximo)methylsilan, Tris-(methylethylketoximo)vinylsilan, Tris-(methylethylketoximo)phenhylsilan, N,N-Bis-(triethoxysilylpropyl)amin, N,N-Bis-(trimethoxysilylpropyl)amin, oder 1,2-Bis-(triethoxysilyl)ethan.
Besonders bevorzugt handelt es sich beim Silan der Formel (III) um Vinyltrimethoxysilan oder Tetraethoxysilan oder deren Mischung.

Weiterhin können die Silane auch bereits teilweise (ein Teil aller R⁷ = H) oder vollständig hydrolysiert (alle R⁷ = H) vorliegen. Aufgrund der stark erhöhten Reaktivität von teilweise oder vollständig hydrolysierten Silanen kann ihr Einsatz als Vernetzer vorteilhaft sein. Dem Fachmann ist dabei bekannt, dass es beim Einsatz von teilweise oder vollständig hydrolysierten Silanen zur Bildung von oligomeren Siloxanen, insbesondere von Dimeren und/oder Trimeren kommen kann, welche durch Kondensation von hydrolysierten Silanen gebildet werden. Demnach können als Vernetzer für die zweikomponentige Siliconzusammensetzung auch oligomere Siloxane eingesetzt werden. Beispielsweise sind geeignete oligomere Siloxane Hexamethoxydisiloxan, Hexaethoxydisiloxan, Hexa-n-propoxydisiloxan, Hexa-n-butoxydisiloxan, Octaethoxytrisiloxan, Octa-n-butoxytrisiloxan und Decaethoxytetrasiloxan.

Selbstverständlich kann als Vernetzer für die zweikomponentige Siliconzusammensetzung auch eine beliebige Mischung der vorhergehend genannten Silane eingesetzt werden.

Der Anteil des Vernetzers für Polydiorganosiloxane beträgt vorzugsweise 0. 1 bis 15 Gew.-%, insbesondere 1 bis 10 Gew.-%, bevorzugt 2 bis 5 Gew.-%, der gesamten Siliconzusammensetzung.

Weiterhin umfasst die erfindungsgemässe Siliconzusammensetzung mindestens eine zinnorganische Verbindung.
Bevorzugte zinnorganische Verbindungen sind Dialkylzinnverbindungen wie sie beispielsweise ausgewählt sind aus der Gruppe bestehend aus Dimethylzinndi-2-ethylhexanoat, Dimethylzinndilaurat, Di-n-butylzinndiacetat, Di-n-butylzinnacetoacetonat, Di-n-butylzinndioxid, Di-n-butylzinndi-2-ethylhexanoat, Di-n-butylzinndicaprylat, Di-n-butylzinndi-2,2-dimethyloctanoat, Di-n-butylzinndilaurat, Di-n-butylzinn-distearat, Di-n-butylzinndimaleinat, Di-n-butylzinndioleat, Di-n-octylzinndiacetat, Di-n-octylzinnacetoacetonat, Di-n-octylzinndioxid, Di-n-octylzinndi-2-ethylhexanoat, Di-n-octylzinndi-2,2-dimethyloctanoat, Di-n-octylzinndimaleinat und Di-n-octylzinndilaurat.

Selbstverständlich ist es möglich oder in gewissen Fällen sogar bevorzugt, Mischungen verschiedener zinnorganischer Verbindungen einzusetzen.

Der Anteil der zinnorganischen Verbindung beträgt vorzugsweise 0.001 bis 1 Gew.-%, insbesondere 0.005 bis 0.1 Gew.-%, der gesamten Siliconzusammensetzung.

Die erfindungsgemässe Siliconzusammensetzung umfasst weiterhin mindestens einen Komplex eines Elements ausgewählt aus den Gruppen 4, 10, 12, 13 und 15 des Periodensystems der Elemente.
Insbesondere handelt es sich dabei um einen Komplex von Bor, Aluminium, Antimon, Bismut, Titan, Zirconium oder Zink, bevorzugt von Titan oder Zirconium.

Besonders bevorzugte Komplexe, insbesondere von Titan und Zirconium, weisen Liganden auf, welche ausgewählt sind aus der Gruppe bestehend aus Alkoxygruppe, Sulfonatgruppe, Carboxylatgruppe, Dialkylphosphatgruppe, Dialkylpyrophosphatgruppe und Acetylacetonatgruppe, wobei alle Liganden identisch oder verschieden voneinander sein können.
Als Alkoxygruppen haben sich insbesondere so genannte Neoalkoxy-Substituenten, beispielsweise ein 2,2-Bis((Allyloxy)methyl)butoxy-Substituent, als besonders geeignet erwiesen.
Als Sulfonsäuren haben sich insbesondere aromatische Sulfonsäuren, deren Aromaten mit einer Alkylgruppe substituiert sind, als besonders geeignet erwiesen.
Besonders geeignet als Carboxylatgruppen haben sich insbesondere Carboxylate von Fettsäuren erwiesen. Als bevorzugtes Carboxylat gelten Decanoat, Stearat und Isostearat.

Insbesondere weist der Komplex, insbesondere das Titanat oder das Zirconat, mindestens einen mehrzähnigen Liganden, auch Chelatligand genannt, auf. Insbesondere ist der mehrzähnige Ligand ein zweizähniger Ligand.

Vorzugsweise handelt es sich beim zweizähnigen Liganden um einen Liganden der Formel (IV)

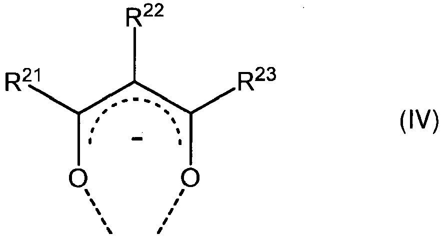

Dabei steht der Rest R²¹ für ein Wasserstoffatom oder für eine lineare oder verzweigte Alkylgruppe mit 1 bis 8 C-Atomen, insbesondere für eine Methylgruppe.
Der Rest R²² steht für ein Wasserstoffatom oder für eine lineare oder verzweigte Alkylgruppe mit 1 bis 8 C-Atomen, welche gegebenenfalls Heteroatome aufweist, insbesondere für ein Wasserstoffatom.
Der Rest R²³ steht für ein Wasserstoffatom oder für eine Alkylgruppe mit 1 bis 8, insbesondere mit 1 bis 3, C-Atomen oder für eine lineare oder verzweigte Alkoxygruppe mit 1 bis 8, insbesondere mit 1 bis 3, C-Atomen.

Bevorzugt handelt es sich beim Komplex um ein Titanat der Formel (V).

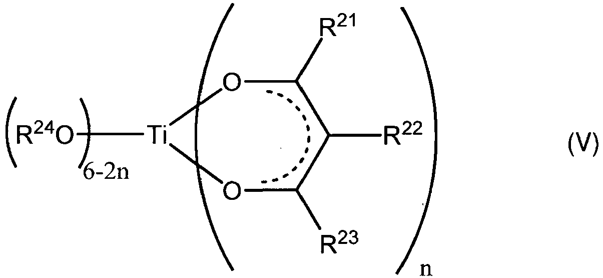

Die Reste R²¹, R²² und R²³ wurden bereits vorhergehend beschreiben.
Der Rest R²⁴ steht für einen linearen oder verzweigten Alkylrest mit 1 bis 20 C-Atomen, insbesondere für einen Isobutyl- oder für einen Isopropylrest.
n steht für einen Wert von 1 oder 2, insbesondere für 2.
Bevorzugt sind Titanate der Formel (V), wobei der Rest R²¹ für eine Methylgruppe, der Rest R²² für ein Wasserstoffatom, der Rest R²³ für eine Methylgruppe oder Methoxy- oder Ethoxygruppe und der Rest R²⁴ für einen Isobutyl- oder für einen Isopropylrest steht.

Geeignete Titanate sind beispielsweise unter den Handelsnamen Tyzor^{®} AA, GBA, GBO, AA-75, AA-65, AA-105, DC, BEAT, IBAY kommerziell erhältlich von der Firma Dorf Ketal oder unter den Handelsnamen Tytan™ PBT, TET, X85, TAA, ET, S2, S4 oder S6 kommerziell erhältlich von Borica.
Geeignete Zirkonate sind beispielsweise unter den Handelsnamen Tyzor^{®} NBZ, NPZ, TEAZ, 212, 215, 217, 223 kommerziell erhältlich von der Firma Dorf Ketal oder unter den Handelsnamen K-Kat 4205 oder K-Kat XC-6212 von der Firma King Industries. Ein geeignetes Aluminat ist beispielsweise erhältlich unter dem Handelsnamen K-Kat 5218 von der Firma King Industries. Geeignete Bismutate sind beispielsweise erhältlich unter dem Handelsnamen K-Kat 348 und K-Kat XC-8203 von der Firma King Industries. Selbstverständlich ist es möglich oder in gewissen Fällen sogar bevorzugt, Mischungen verschiedener Komplexe eines Elements ausgewählt aus den Gruppen 4, 10, 12, 13 und 15 des Periodensystems der Elemente einzusetzen.

Der Anteil an Komplex beträgt vorzugsweise 0.002 bis 5 Gew.-%, insbesondere 0.005 bis 3 Gew.-%, bevorzugt 0.01 bis 1.5 Gew.-%, der gesamten Siliconzusammensetzung.

Die zinnorganische Verbindung und der Komplex eines Elements ausgewählt aus den Gruppen 4, 10, 12, 13 und 15 des Periodensystems der Elemente bilden zusammen ein Katalysator- oder Beschleunigersystem für die Vernetzung des Polydiorganosiloxans.
Bevorzugt beträgt der Anteil der zinnorganischen Verbindung und des mindestens einen Komplexes zusammen 0.005 bis 7 Gew.-%, insbesondere 0.01 bis 5 Gew.-%, bevorzugt 0.02 bis 2 Gew.-%, bezogen auf die gesamte Siliconzusammensetzung.
Das Verhältnis der zinnorganischen Verbindung zum Komplex liegt vorzugsweise zwischen 1:10 und 100:1, insbesondere zwischen 1:1 und 80:1, bevorzugt zwischen 5:1 und 50:1 und meist bevorzugt zwischen 10:1 und 30:1.

Die erfindungsgemässe Siliconzusammensetzung umfasst weiterhin mindestens eine Kieselsäure mit einer BET-Oberfläche von 50 bis 300 m²/g, insbesondere von 100 bis 250 m²/g.
Geeignete Kieselsäuren sind gefällte oder pyrogene Kieselsäuren, die oberflächenhydrophobiert sein können oder die unbehandelt, d.h. hydrophil, vorliegen können.
Als hydrophobierte Kieselsäuren eignen sich typischerweise siliconisierte und/oder silanisierte Kieselsäuren, welche dann einen Kohlenstoffgehalt von 0.6 bis 6.5 Gew.-% bezogen auf das Gesamtgewicht der Kieselsäure aufweisen. Geeignete Kieselsäuren können aber auch nicht behandelt, also hydrophil, vorliegen. Es können weiterhin auch Mischungen verschiedener Kieselsäuren eingesetzt werden.
Der Anteil an Kieselsäure beträgt vorzugsweise 1 bis 35 Gew.-%, insbesondere 3 und 30 Gew.-%, bevorzugt 5 und 25 Gew.-%, besonders bevorzugt 8 und 20 Gew.-%, bezogen auf die gesamte Siliconzusammensetzung.

Weiterhin umfasst die erfindungsgemässe Siliconzusammensetzung mindestens eine Kreide mit einer BET-Oberfläche von 5 bis 25 m²/g und einer mittleren Teilchengrösse d50 von 10 bis 1000 nm.
Die Angabe der Teilchengrösse d50 bezieht sich dabei darauf, dass 50 Gew.-% der Teilchen eine Grösse aufweisen, welche gleich oder kleiner ist als der angegebe Wert. Die Teilchengrösse d50 kann typischerweise durch Laserlichtstreuung in Anlehnung an die Norm ISO 13320:2009, beispielsweise mit dem Gerät CILAS 920 der Firma CILAS bestimmt werden.

Geeignete Kreiden sind natürliche oder gefällte Kreiden (Calciumcarbonate), die insbesondere oberflächenbehandelt, also hydrophob, vorliegen. Die Oberflächenbehandlung kann beispielsweise durch Behandlung mit Fettsäuren, insbesondere Stearinsäure, bevorzugt mit Calciumstearat, erfolgen. Natürlich können auch Mischungen verschiedener Kreiden eingesetzt werden.

Der Anteil an Kreide beträgt vorzugsweise 1 bis 50 Gew.-%, insbesondere 2 und 40 Gew.-%, bevorzugt 5 und 30 Gew.-%, besonders bevorzugt 7 und 25 Gew.-%, bezogen auf die gesamte Siliconzusammensetzung.

Die Kieselsäure und die Kreide werden als Füllstoffe in der erfindungsgemässen Siliconzusammensetzung eingesetzt. Die Füllstoffe beeinflussen sowohl die rheologischen Eigenschaften der nicht ausgehärteten Zusammensetzung als auch die mechanischen Eigenschaften und die Oberflächenbeschaffenheit der ausgehärteten Zusammensetzung.
Eine Gesamtmenge an Füllstoff in der Siliconzusammensetzung liegt typischerweise im Bereich von 10 bis 70 Gew.-%, insbesondere 15 bis 60 Gew.-%, bevorzugt 30 bis 60 Gew.-%.

Die erfindungsgemässe Siliconzusammensetzung kann gegebenenfalls noch weitere Bestandteile enthalten.
Derartige zusätzliche Bestandteile sind insbesondere Weichmacher, weitere Füllstoffe, Härtungsbeschleuniger, Pigmente, Haftvermittler, Verarbeitungshilfsmittel, Rheologiemodifikatoren, Stabilisatoren, Farbstoffe, Inhibitoren, Hitzestabilisatoren, Antistatika, Flammschutzmittel, Biozide, Wachse, Verlaufsmittel, Thixotropierungsmittel und weitere dem Fachmann bekannte gängige Rohstoffe und Additive.
Beim Einsatz von derartigen optionalen Bestandteilen ist es vorteilhaft, alle genannten, in der Siliconzusammensetzung gegebenenfalls vorhandenen, Bestandteile so auszuwählen, dass die Lagerstabilität der Siliconzusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Siliconzusammensetzung führende Reaktionen während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Geeignete Weichmacher für die erfindungsgemässe Siliconzusammensetzung sind insbesondere trialkylsilylterminierte Polydialkylsiloxane, insbesondere trimethylsilylterminierte Polydimethylsiloxane. Bevorzugt sind trimethylsilylterminierte Polydimethylsiloxane mit Viskositäten zwischen 1 und 10'000 mPa·s. Besonders bevorzugt sind Viskositäten zwischen 10 und 1'000 mPa·s. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind. Es ist auch möglich anstatt der Polysiloxan-Weichmacher, organische Verbindungen, wie zum Beispiel bestimmte Kohlenwasserstoffe oder deren Gemische, als Weichmacher einzusetzen. Derartige Kohlenwasserstoffe können aromatisch oder aliphatisch sein. Bei der Auswahl ist insbesondere darauf zu achten, dass diese Kohlenwasserstoffe eine geringe Flüchtigkeit und eine hinreichende Verträglichkeit mit den übrigen Bestandteilen der Siliconzusammensetzung aufweisen.
Der Anteil des Weichmachers beträgt vorzugsweise 2 bis 15 Gew.-%, insbesondere 5 bis 10 Gew.-%, der gesamten Siliconzusammensetzung.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei den Alkoxygruppen derartiger Silane handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Weiterhin eignen sich als Haftvermittler beispielsweise auch aminofunktionelle Alkylsilsesquioxane wie aminofunktionelles Methylsilsesquioxan oder aminofunktionelles Propylsilsesquioxan, alkoxylierte Alkylenamine, insbesondere ethoxylierte und/oder propoxylierte Alkylendiamine, sowie weitere, insbesondere substituierte, Oligomere, Polymere oder Copolymere auf Basis von Polyalkylenglykolen.
Es ist dem Fachmann klar, dass bei der Verwendung von Silanen als Haftvermittler die Möglichkeit besteht, dass diese je nach Bedingungen, beispielsweise bei Feuchtigkeit, teilweise oder vollständig hydrolysiert vorliegen können. Weiterhin ist dem Fachmann bekannt, dass es bei der Anwesenheit solcher teilweise oder vollständig hydrolysierten Silane durch Kondensationsreaktionen zur Bildung von oligomeren Siloxanen, insbesondere zu Dimeren und/oder Trimeren kommen kann.

Der Anteil des Haftvermittlers beträgt vorzugsweise 0.1 bis 15 Gew.-%, insbesondere 1 bis 10 Gew.-%, bevorzugt 1 bis 5 Gew.-%, der gesamten zweikomponentigen Siliconzusammensetzung.

Die erfindungsgemässe Siliconzusammensetzung kann als einkomponentige oder als zweikomponentige Zusammensetzung ausgebildet sein.
Handelt es sich um eine einkomponentige Siliconzusammensetzung ist sie insbesondere so beschaffen, dass sie unter Einfluss von Wärme oder von Feuchtigkeit vernetzt. Meist bevorzugte einkomponentige Siliconzusammensetzungen vernetzen bei Raumtemperatur unter dem Einfluss von Feuchtigkeit, insbesondere von Luftfeuchtigkeit, wobei die Vernetzung durch Kondensation von Silanolgruppen unter Bildung von Siloxanbindungen erfolgt.

Handelt es sich bei der Siliconzusammensetzung um eine zweikomponentige Zusammensetzung, so ist sie insbesondere eine zweikomponentige Siliconzusammensetzung bestehend aus einer Komponente **A** und einer Komponente **B**, wobei das Polydiorganosiloxan, der Vernetzer und das Katalysator- oder Beschleunigersystem aus zinnorganischer Verbindung und Komplex so auf die beiden Komponenten aufgeteilt werden, dass die Vernetzungsreaktion erst beim oder nach dem Mischen der beiden Komponenten einsetzt.

Insbesondere besteht die zweikomponentige Siliconzusammensetzung aus einer Komponente **A** umfassend
- das mindestens eine additions- oder kondensationsvernetzbare Polydiorganosiloxan mit einer Viskosität von 10 bis 500'000 mPa·s bei einer Temperatur von 23°C,
- die mindestens eine Kieselsäure mit einer BET-Oberfläche von 50 bis 300 m²/g, sowie
- die mindestens eine Kreide mit einer BET-Oberfläche von 10 bis 25 m²/g und einer mittleren Teilchengrösse d50 von 10 bis 1000 nm;
   und einer Komponente **B** umfassend
- den mindestens einen Vernetzer für das Polydiorganosiloxan,
- die mindestens eine zinnorganische Verbindung,
- den mindestens einen Komplex eines Elements ausgewählt aus den Gruppen 4, 10, 12, 13 und 15 des Periodensystems der Elemente.

Sowohl Komponente **A** als auch Komponente **B** der beschriebenen zweikomponentigen Siliconzusammensetzung werden unter Ausschluss von Feuchtigkeit hergestellt und aufbewahrt. Getrennt voneinander sind die beiden Komponenten lagerstabil, d.h., sie können in einer geeigneten Verpackung oder Anordnung über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändern. Üblicherweise wird die Lagerstabilität über die Messung der Viskosität oder der Reaktivität über die Zeit ermittelt.

Bei der Applikation der zweikomponentigen Siliconzusammensetzung werden die Komponenten **A** und **B**, beispielsweise durch Rühren, Kneten, Walzen oder dergleichen, insbesondere jedoch über einen Statikmischer, miteinander vermischt, wobei es zur Aushärtung der Zusammensetzung kommt. Die Aushärtung der zweikomponentigen Siliconzusammensetzung erfolgt insbesondere bei Raumtemperatur.

Handelt es sich bei der erfindungsgemässen Siliconzusammensetzung um eine zweikomponentige Siliconzusammensetzung, wird diese insbesondere so eingesetzt, dass das Gewichtsverhältnis der Komponente **A** zur Komponente **B** ≥1:1, insbesondere von 3:1 bis 15:1, bevorzugt von 10:1 bis 13:1, beträgt.

Bei der Vernetzung der Siliconzusammensetzung entstehen als Reaktionsprodukte der Kondensationsreaktion insbesondere auch Verbindungen der Formel HO-R⁴, wobei R⁴ bereits vorhergehend beschrieben wurde. Bevorzugt handelt es sich bei diesen Nebenprodukten der Kondensationsreaktion um Verbindungen, welche weder die Zusammensetzung noch das Substrat, auf dem die Zusammensetzung appliziert wird beeinträchtigen. Meist bevorzugt handelt es sich beim Reaktionsprodukt der Formel HO-R⁴ um eine Verbindung, welche sich leicht aus der vernetzenden oder der bereits vernetzten Zusammensetzung verflüchtigt.

Weiterhin betrifft die vorliegende Erfindung die Verwendung einer Siliconzusammensetzung, wie sie vorhergehend beschrieben worden ist, als Klebstoff, Dichtstoff, Beschichtung oder als Gussmasse.

Insbesondere eignet sich die erfindungsgemässe Siliconzusammensetzung zum Verkleben, Abdichten oder Beschichten von Substraten, welche ausgewählt sind aus der Gruppe bestehend aus Beton, Mörtel, Backstein, Ziegel, Keramik, Gips, Naturstein wie Granit oder Marmor, Glas, Glaskeramik, Metall oder Metalllegierung wie Aluminium, Stahl, Buntmetall, verzinktes Metall, Holz, Kunststoff wie PVC, Polycarbonat, Polymethyl(meth)acrylat, Polyester, Epoxidharz, Farbe und Lack.

Bevorzugt wird die Siliconzusammensetzung im Baubereich, insbesondere im Fenster- und Fassadenbau, verwendet.

Weiterhin betrifft die vorliegende Erfindung eine gehärtete Siliconzusammensetzung erhältlich aus einer einkomponentigen Siliconzusammensetzung gemäss vorhergehender Beschreibung, insbesondere durch Reaktion mit Feuchtigkeit, oder aus einer ebenfalls vorhergehend beschriebenen zweikomponentigen Siliconzusammensetzung durch Mischen der Komponente **A** mit der Komponente **B**.

Weiterhin betrifft die vorliegende Erfindung die Verwendung einer Füllstoffkombination umfassend mindestens eine Kieselsäure mit einer BET-Oberfläche von 50 bis 300 m²/g sowie mindestens eine Kreide mit einer BET-Oberfläche von 10 bis 25 m²/g und einer mittleren Teilchengrösse d50 von 10 bis 1000 nm, zusammen mit einem Katalysator oder Beschleunigersystem umfassend mindestens eine zinnorganische Verbindung sowie mindestens einen Komplex eines Elements ausgewählt aus den Gruppen 4, 10, 12, 13 und 15 des Periodensystems der Elemente, zur Erhöhung des Weiterreisswiderstands von Siliconzusammensetzungen.

Es ist ein besonderer Vorteil der vorliegenden Erfindung, dass nunmehr die Formulierung von ein- und zweikomponentigen Siliconzusammensetzungen mit verbessertem Weiterreisswiderstand möglich ist, wobei als Füllstoffe sowohl natürliche als auch gefällte Kreiden, die gemeinsam mit pyrogenen sowie gefällten Kieselsäuren, die behandelt oder unbehandelt vorliegen können, eingesetzt werden. Im Gegensatz zum Stand der Technik, kann also eine deutlich erweiterte Palette von Füllstoffen, insbesondere auch von besonders kostengünstigen, verwendet werden.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Herstellung der Siliconzusammensetzungen

### Verwendete Rohstoffe:

OH-terminiertes PDMS der Viskosität 50 Pa·s kann unter dem Handelsnamen Polymer FD 50 von der Firma Wacker bezogen werden. OH-terminiertes PDMS der Viskosität 80 mPa·s kann unter dem Handelsnamen Polymer OH 0.08 von der Firma Hanse Chemie bezogen werden. (CH₃)₃Si-terminiertes PDMS der Viskosität 100 mPa·s kann unter dem Handelsnamen Siliconöl AK 100 von der Firma Wacker bezogen werden. Vinyl-terminiertes PDMS der Viskosität 20 Pa·s kann unter dem Handelsnamen Flexosil^{®} VinylFluid 20'000 von der Firma BRB bezogen werden. Gefällte Kreide kann unter den Handelsnamen Winnofil^{®} oder Socal^{®} von der Firma Solvay bezogen werden. Natürliche Kreide kann unter den Handelsnamen Calcilit^{®} oder Calciplast^{®} von der Firma Alpha-Calcit oder unter dem Handelsnamen Carbital^{®} von der Firma Imerys bezogen werden. Fällungskieselsäuren können unter dem Handelsnamen Sipernat^{®} von der Firma Evonik oder unter dem Handelsnamen Zeosil^{®} von der Firma Rhodia bezogen werden. Pyrogene Kieselsäuren können unter dem Handelsnamen Cabosil^{®} von der Firma Cabot oder unter dem Handelsnamen Aerosil^{®} von der Firma Evonik oder unter dem Handelsnamen HDK^{®} von der Firma Wacker bezogen werden. Titandioxid kann unter dem Handelsnamen Kronos 2500 von der Firma Kronos bezogen werden. Silane und Siloxane können unter den Handelsnamen Dynasylan^{®} von der Firma Evonik oder unter dem Handelsnamen Geniosil^{®} von der Firma Wacker bezogen werden. Zinnorganische Verbindungen können unter dem Handelsnamen TIB Kat^{®} von der Firma TIB bezogen werden. Titanate und Zirkonate können unter dem Handelsnamen Tyzor^{®} von der Firma DorfKetal bezogen werden. Industrierusse können unter dem Handelsnamen Monarch^{®} von der Firma Cabot oder unter dem Handelsnamen Printex^{®} von der Firma OrionCarbon bezogen werden.

Als Komponenten **A** der zweikomponentigen Siliconzusammensetzung wurden die in Tabelle 1 aufgeführten Bestandteile in den angegebenen Gewichtsteilen in einem Dissolver bei Raumtemperatur unter Inertatmosphäre miteinander vermischt und eingerührt, bis eine makroskopisch homogene Paste erhalten wurde.

### Als Komponente B wurden folgende Komponenten hergestellt:

Komponente **B1**: In einem Dissolver wurden bei Raumtemperatur 34.7 Gew.-% eines vinylterminierten Polydimethylsiloxans mit einer Viskosität von 20'000 mPa·s, 20 Gew.-% Tetraethylorthosilicat, 6 Gew.-% eines Ethylpolykieselsäureesters mit einer mittleren Molmasse von ca. 800 g/mol, 6 Gew.-% Octyltrimethoxysilan, 2 Gew.-% Diisobutoxy-bisethylacetoacetatoorthotitanat, 1.3 Gew.-% Di-n-octylzinnacetylacetonat, 10 Gew.-% 2-Aminoethyl-3-aminopropyltriethoxysilan, 5 Gew.-% einer hydrophoben, pyrogenen Kieselsäure mit einer BET-Oberfläche von 150 m²/g und einem Kohlenstoffgehalt von ca. 2.8 Gew.-%, die in einem vinylterminierten Polydimethylsiloxan vordispergiert wurde sowie 15 Gew.-% eines Industrierusses mit einer BET-Oberfläche von 84 m²/g und einer Primärteilchengrösse von 27 nm (Gew.-% jeweils bezogen auf die Gesamtmischung), gemischt bis eine makroskopisch homogene Paste erhalten wurde.

Komponente **B2**: In einem Dissolver wurden bei Raumtemperatur 36 Gew.-% eines vinylterminierten Polydimethylsiloxans mit einer Viskosität von 20'000 mPa·s, 20 Gew.-% Tetraethylorthosilicat, 6 Gew.-% eines Ethylpolykieselsäureesters mit einer mittleren Molmasse von ca. 800 g/mol, 6 Gew.-% Octyltrimethoxysilan, 2 Gew.-% Di-n-octylzinnacetylacetonat, 10 Gew.-% 2-Aminoethyl-3-aminopropyltriethoxysilan, 5 Gew.-% einer hydrophoben, pyrogenen Kieselsäure mit einer BET-Oberfläche von 150 m²/g und einem Kohlenstoffgehalt von ca. 2.8 Gew.-%, die in einem vinylterminierten Polydimethylsiloxan vordispergiert wurde sowie 15 Gew.-% eines Industrierusses mit einer BET-Oberfläche von 84 m²/g und einer Primärteilchengrösse von 27 nm (Gew.-% jeweils bezogen auf die Gesamtmischung), gemischt bis eine makroskopisch homogene Paste erhalten wurde.

Komponente **B3**: In einem Dissolver wurden bei Raumtemperatur 34.7 Gew.-% eines vinylterminierten Polydimethylsiloxans mit einer Viskosität von 20'000 mPa·s, 20 Gew.-% Tetraethylorthosilicat, 6 Gew.-% eines Ethylpolykieselsäureesters mit einer mittleren Molmasse von ca. 800 g/mol, 6 Gew.-% Octyltrimethoxysilan, 2 Gew.-% Tetra-n-propylorthozirconat, 1.3 Gew.-% Di-n-octylzinnacetylacetonat, 10 Gew.-% 2-Aminoethyl-3-aminopropyltriethoxysilan, 5 Gew.-% einer hydrophoben, pyrogenen Kieselsäure mit einer BET-Oberfläche von 150 m²/g und einem Kohlenstoffgehalt von ca. 2.8 Gew.-%, die in einem vinylterminierten Polydimethylsiloxan vordispergiert wurde sowie 15 Gew.-% eines Industrierusses mit einer BET-Oberfläche von 84 m²/g und einer Primärteilchengrösse von 27 nm (Gew.-% jeweils bezogen auf die Gesamtmischung), gemischt bis eine makroskopisch homogene Paste erhalten wurde.

Die hergestellten Komponenten **A** und **B** der zweikomponentigen Siliconzusammensetzungen wurden getrennt in Kartuschen abgefüllt, luftdicht verschlossen gelagert und direkt vor der Applikation wie in Tabelle 1 angegeben im Gewichtsverhältnis **A:B** von 13:1 in einem Dissolver miteinander vermischt bis eine makroskopisch homogene Paste erhalten wurde.

Als einkomponentige Siliconzusammensetzung wurden die in Tabelle 2 aufgeführten Bestandteile in den angegebenen Gewichtsteilen in einem Dissolver bei Raumtemperatur unter Inertatmosphäre miteinander vermischt und eingerührt, bis eine makroskopisch homogene Paste erhalten wurde.

Die hergestellten einkomponentigen Siliconzusammensetzungen wurden direkt in Kartuschen abgefüllt und bis zur Applikation luftdicht verschlossen gelagert.

### Beschreibung der Prüfmethoden

Die Methode zur Bestimmung der **Bruchdehnung** sowie der **Zugfestigkeit** sowie die Herstellung der dazu benötigten Probekörper ist beschrieben in ISO 527. Gemessen wurde bei 23°C und 50% relativer Luftfeuchtigkeit an einem Prüfkörper Typ 1 B (ISO 527-2) und mit einer Zuggeschwindigkeit von 200 mm/min.

Die Methode zur Bestimmung des **Weiterreisswiderstandes** sowie die Herstellung der dazu benötigten Probekörper ist beschrieben in der DIN ISO 34-1. Gemessen wurde an Prüfkörpern vom Typ C.

**Tabelle 1: Zweikomponentige Siliconzusammensetzungen und Resultate**

| | | **1** | **2** | **3** | **4** | **5** | **6** | **7** | **8** | **9** |
|---|---|---|---|---|---|---|---|---|---|---|
| **A** | OH-term. PDMS (Viskosität: 50'000 mPa·s) | 31 | 31 | 31 | 31 | 31 | 31 | 31 | 31 | 31 |
| | OH-term. PDMS (Viskosität: 80 mPa·s) | 0.6 | 0.5 | 0.5 | 0.5 | 0.5 | 0.5 | 0.5 | 0.6 | 0.5 |
| | (CH₃)₃Si-term. PDMS (Viskosität: 100 mPa·s) | 39 | 39 | 39 | 39 | 39 | 39 | 39 | 39.2 | 39 |
| | Gefällte Kreide mit Stearat behandelt (BET-Oberfläche: 15-24 m²/g) | 15.5 | 15.5 | 15.5 | 15.5 | 15.5 | | | 15.5 | 15.5 |
| | Natürliche Kreide mit Stearat behandelt (BET-Oberfläche: 10 m²/g, d50 = 0.8 µm) | | | | | | 15.5 | 15.5 | | |
| | Hydrophobe, pyrogene Kieselsäure (BET-Oberfläche: 220 m²/g, C-Gehalt: 3-4 Gew.-%) | 13.8 | | | | | | | | |
| | Hydrophobe, pyrogene Kieselsäure (BET-Oberfläche: 160 m²/g, C-Gehalt: 2-4 Gew.-%) | | 13.8 | 13.8 | | | 13.8 | 13.8 | | 13.8 |
| | Hydrophobe, gefällte Kieselsäure (BET-Oberfläche: 125 m²/g, HMDS-behandelt) | | | | 13.8 | 13.8 | | | | |
| | Hydrophile, gefällte Kieselsäure (BET-Oberfläche: 165 m²/g) | | | | | | | | 13.5 | |
| | TiO₂ (Rutil) (Olzahl (ISO 787/5): 12) | 0.2 | 0.2 | 0.2 | 0.2 | 0.2 | 0.2 | 0.2 | 0.2 | 0.2 |
| **B** | Gewichtsverhältnis A:B = 13:1 | B1 | B1 | B2 | B1 | B2 | B1 | B2 | B1 | B3 |
| | | | | | | | | | | |
| | Bruchdehnung (%) | 327 | 364 | 330 | 395 | 361 | 317 | 300 | 568 | 355 |
| | Zugfestigkeit [MPa] | 1.6 | 1.4 | 1.1 | 1.6 | 1.5 | 1.1 | 1.0 | 2 | 1.2 |
| | Weiterreisswiderstand (Dye B) [N/mm] | 12 | 8 | 4 | 10 | 5 | 8 | 3 | 12 | 9 |

**Tabelle 2: Einkomponentige Siliconzusammensetzungen und Resultate**

| | **10** | **11** |
|---|---|---|
| (CH₃O)₂MeSi-term. PDMS (Viskosität: 50 Pa·s) | 35.3 | 35.3 |
| (CH₃)₃Si-term. PDMS (Viskosität: 1000 mPa·s) | 21 | 21 |
| Methylsiliconharz, MeOhaltig (Viskosität: 20 mPa·s) | 1.2 | 1.2 |
| Methyltrimethoxysilan | 0.5 | 0.5 |
| Vinyltrimethoxysilan | 1.5 | 1.5 |
| Octylphosphonsäure + Methyltrimethoxysilan (1:0.75) | 0.3 | 0.3 |
| Di-iso-butoxy-bis(ethylacetoacetato)-titant | 1.5 | 1.5 |
| Di-octyl-zinn-acetoacetonat | 0.2 | |
| Natürliche Kreide mit Stearat behandelt (BET-Oberfläche: 5 m²/g, d50 = 2 µm) | 10 | 10.7 |
| Hydrophobe, pyrogene Kieselsäure (BET-Oberfläche: 160 m²/g, C-Gehalt: 2-4 Gew.-%) | 13.5 | 13 |
| Gefällte Kreide mit Stearat behandelt (BET-Oberfläche: 15-24 m²/g) | 15 | 15 |
| | | |
| Bruchdehnung (%) | 550 | 450 |
| Zugfestigkeit [MPa] | 2.3 | 2.2 |
| Weiterreisswiderstand (Dye B) [N/mm] | 18 | 7 |

## Patentansprüche

1. Siliconzusammensetzung umfassend
- mindestens ein additions- oder kondensationsvernetzbares Polydiorganosiloxan mit einer Viskosität von 10 bis 500'000 mPa·s bei einer Temperatur von 23°C,
- mindestens einen Vernetzer für das Polydiorganosiloxan,
- mindestens eine zinnorganische Verbindung,
- mindestens einen Komplex eines Elements ausgewählt aus den Gruppen 4, 10, 12, 13 und 15 des Periodensystems der Elemente,
- mindestens eine Kieselsäure mit einer BET-Oberfläche von 50 bis 300 m²/g, sowie
- mindestens eine Kreide mit einer BET-Oberfläche von 10 bis 25 m²/g und einer mittleren Teilchengrösse d50 von 10 bis 1000 nm.

2. Siliconzusammensetzung gemäss Anspruch 1, **dadurch gekennzeichnet, dass** das Polydiorganosiloxan ein vinylterminiertes Polydiorganosiloxan oder ein Polydiorganosiloxan **P** der Formel (I) ist, 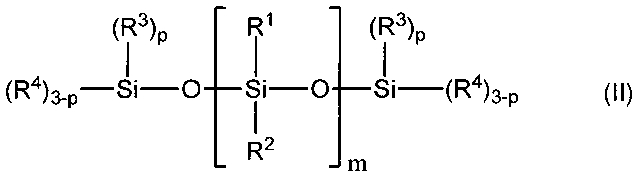 wobei
die Reste R¹, R² und R³ unabhängig voneinander für lineare oder verzweigte, einwertige Kohlenwasserstoffreste mit 1 bis 12 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen,
die Reste R⁴ unabhängig voneinander für Hydroxylgruppen oder für Alkoxy-, Acetoxy- oder Ketoximgruppen mit jeweils 1 bis 13 C-Atomen stehen, welche gegebenenfalls ein oder mehrere Heteroatome, und gegebenenfalls eine oder mehrere C-C-Mehrfachbindungen und/oder gegebenenfalls cycloaliphatische und/oder aromatische Anteile aufweisen,
der Index p für einen Wert von 0, 1 oder 2 steht; und
der Index m so gewählt ist, dass das Polydiorganosiloxan **P** bei einer Temperatur von 23°C eine Viskosität von 10 bis 500'000 mPa·s aufweist.

3. Siliconzusammensetzung gemäss einem der vorhergehenden Ansprüche, **dadurch gekennzeichnet, dass** der mindestens eine Komplex ein Komplex von Bor, Aluminium, Antimon, Bismut, Titan, Zirconium oder Zink ist.

4. Siliconzusammensetzung gemäss Anspruch 3, **dadurch gekennzeichnet, dass** der Komplex ein Komplex von Titan oder Zirconium ist.

5. Siliconzusammensetzung gemäss einem der vorhergehenden Ansprüche, **dadurch gekennzeichnet, dass** der Anteil der zinnorganischen Verbindung und des mindestens einen Komplexes zusammen 0.005 bis 7 Gew.-% bezogen auf die gesamte Siliconzusammensetzung beträgt.

6. Siliconzusammensetzung gemäss einem der vorhergehenden Ansprüche, **dadurch gekennzeichnet, dass** das Gewichtsverhältnis von zinnorganischer Verbindung zum Komplex zwischen 1:10 und 100:1 liegt.

7. Siliconzusammensetzung gemäss einem der vorhergehenden Ansprüche, **dadurch gekennzeichnet, dass** der Anteil der mindestens einen Kieselsäure mit einer BET-Oberfläche von 50 bis 300 m²/g 1 bis 35 Gew.-% bezogen auf die gesamte Siliconzusammensetzung beträgt.

8. Siliconzusammensetzung gemäss einem der vorhergehenden Ansprüche, **dadurch gekennzeichnet, dass** der Anteil der mindestens einen Kreide mit einer BET-Oberfläche von 10 bis 25 m²/g und einer mittleren Teilchengrösse d50 von 10 bis 1000 nm 1 bis 50 Gew.-% bezogen auf die gesamte Siliconzusammensetzung beträgt.

9. Siliconzusammensetzung gemäss einem der Ansprüche 1 bis 8, **dadurch gekennzeichnet, dass** die Zusammensetzung eine einkomponentige Siliconzusammensetzung ist.

10. Siliconzusammensetzung gemäss einem der Ansprüche 1 bis 8, **dadurch gekennzeichnet, dass** die Zusammensetzung eine zweikomponentige Siliconzusammensetzung ist bestehend aus einer Komponente **A** umfassend
- das mindestens eine additions- oder kondensationsvernetzbare Polydiorganosiloxan mit einer Viskosität von 10 bis 500'000 mPa·s bei einer Temperatur von 23°C,
- die mindestens eine Kieselsäure mit einer BET-Oberfläche von 50 bis 300 m²/g, sowie
- die mindestens eine Kreide mit einer BET-Oberfläche von 10 bis 25 m²/g und einer mittleren Teilchengrösse d50 von 10 bis 1000 nm;
und einer Komponente **B** umfassend
- den mindestens einen Vernetzer für das Polydiorganosiloxan,
- die mindestens eine zinnorganische Verbindung,
- den mindestens einen Komplex eines Elements ausgewählt aus den Gruppen 4, 10, 12, 13 und 15 des Periodensystems der Elemente.

11. Siliconzusammensetzung gemäss Anspruch 10, **dadurch gekennzeichnet, dass** das Gewichtsverhältnis von Komponente **A** zu Komponente **B** ≥ 1:1, insbesondere von 3:1 bis 15:1, bevorzugt von 10:1 bis 13:1, beträgt.

12. Verwendung einer Füllstoffkombination umfassend
mindestens eine Kieselsäure mit einer BET-Oberfläche von 50 bis 300 m²/g sowie mindestens eine Kreide mit einer BET-Oberfläche von 10 bis 25 m²/g und einer mittleren Teilchengrösse d50 von 10 bis 1000 nm;
zusammen mit einem Katalysator- oder Beschleunigersystem umfassend mindestens eine zinnorganische Verbindung sowie mindestens einen Komplex eines Elements ausgewählt aus den Gruppen 4, 10, 12, 13 und 15 des Periodensystems der Elemente,
zur Erhöhung des Weiterreisswiderstands von Siliconzusammensetzungen.

13. Verwendung einer Siliconzusammensetzung gemäss einem der Ansprüche 1 bis 11 als Klebstoff, Dichtstoff, Beschichtung oder Gussmasse.

14. Gehärtete Siliconzusammensetzung erhältlich aus einer einkomponentigen Siliconzusammensetzung gemäss Anspruch 9, insbesondere durch Reaktion mit Feuchtigkeit, oder aus einer zweikomponentigen Siliconzusammensetzung gemäss Anspruch 10 durch Mischen der Komponente **A** mit der Komponente **B**.

## Claims

1. Silicone composition, comprising
- at least one addition or condensation curable polydiorganosiloxane with a viscosity of 10 to 500,000 MPa at a temperature of 23°C,
- at least one cross-linking agent for the polydiorganosiloxane,
- at least one organotin compound,
- at least one complex of an element selected from the groups 4, 10, 12, 13 and 15 of the periodic system of elements,
- at least one silica with a BET surface of 50 to 300 m²/g, as well as
- at least one chalk with a BET surface of 10 to 25 m²/g and an average particle size d50 of 10 to 1000 nm.

2. Silicone composition pursuant to Claim 1, **characterized in that** the polydiorganosiloxane is a vinyl-terminated polydiorganosiloxane or a polydiorganosiloxane **P** of the formula (I), 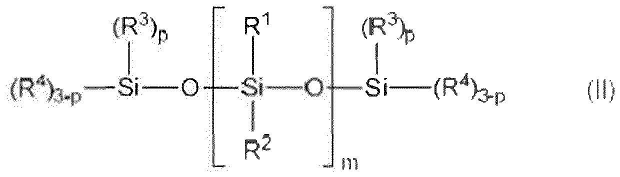 wherein
the residues R¹, R² and R³ independently of each other represent linear or branched monovalent hydrocarbon residues with 1 to 12 C atoms, which optionally comprise one or several heteroatoms, which optionally comprise one or several C-C multiple bonds and/or optionally cycloaliphatic and/or aromatic components,
the R⁴ residues independently of each other represent hydroxyl groups or alkoxy, acetyl or ketoxime groups with respectively 1 to 13 C atoms, which optionally comprise one or several heteroatoms, and optionally one or several C-C multiple bonds and/or optionally cycloaliphatic and/or aromatic components,
the index p represents the value of 0, 1 or 2; and the index m is selected such that the polydiorganosiloxane **P** has a viscosity of 10 to 500,000 MPa at a temperature of 23°C.

3. Silicone composition pursuant to one of the preceding Claims, **characterized in that** the at least one complex is a complex of boron, aluminum, antimony, bismuth, titanium, zirconium or zinc.

4. Silicone composition pursuant to Claim 3, **characterized in that** the complex is a complex of titanium or zirconium.

5. Silicone composition pursuant to one of the preceding Claims, **characterized in that** the percentage of the organotin compound and the at least one complex together is 0.005 to 7 percent by weight, based upon the total silicone composition.

6. Silicone composition pursuant to one of the preceding Claims, **characterized in that** the weight ratio of the organotin compound to the complex is between 1:10 and 100:1.

7. Silicone composition pursuant to one of preceding Claims, **characterized in that** the percentage of the at least one silica has a BET surface of 50 to 300 m²/g 1 to 35 percent by weight, based upon the total silicone composition.

8. Silicone composition pursuant to one of preceding Claims, **characterized in that** the percentage of the at least one chalk has a BET surface of 10 to 25 m²/g and an average particle size d50 of 10 to 1000 nm 1 to 50 percent by weight, based upon the total silicone composition.

9. Silicone composition pursuant to one of the Claims 1 to 8, **characterized in that** the composition is a single-component silicone composition.

10. Silicone composition pursuant to one of the Claims 1 to 8, **characterized in that** the composition is a two-component silicone composition consisting of a component **A**, comprising
- the at least one addition or condensation curable polydiorganosiloxane with a viscosity of 10 to 500,000 MPa at a temperature of 23°C,
- the at least one silica with a BET surface of 50 bis 300 m²/g, as well as
- the at least one chalk with a BET surface of 10 to 25 m²/g and an average particle size d50 of 10 to 1000 nm;
and a component **B**, comprising
- the at least one curing agent for the polydiorganosiloxane,
- the at least one organotin compound,
- the at least one complex of an element selected from the groups 4, 10, 12, 13 and 15 of the periodic system of elements.

11. Silicone composition pursuant to Claim 10, **characterized in that** the weight ratio of component **A** to component **B** is ≥ 1:1, in particular from 3:1 to 15:1, preferably from 10:1 to 13:1.

12. Use of a filler material combination, comprising at least one silica with a BET surface of 50 to 300 m²/g as well as at least one chalk with a BET surface of 10 to 25 m²/g and an average particle size d50 of 10 to 1000 nm; together with a catalyst or accelerator system comprising at least one organotin compound as well as at least one complex of an element selected from the groups 4, 10, 12, 13 and 15 of the periodic system of elements, to increase the tear propagation resistance of silicone compositions.

13. Use of the silicone composition pursuant to one of the Claims 1 to 11 as adhesive, sealant, coating or pouring compound.

14. Cured silicone composition obtainable from a single-component silicone composition pursuant to Claim 9, in particular by reaction with moisture, or from a two-component silicone composition pursuant to Claim 10 by mixing the component **A** with the component **B**.

## Revendications

1. Composition de silicone comprenant
- au moins un polydiorganosiloxane durcissable par addition ou condensation avec une viscosité de 10 à 500000 MPa à une température de 23 °C,
- au moins un agent de réticulation pour le polydiorganosiloxane,
- au moins un composé organotine,
- au moins un complexe d'un élément choisi dans les groupes 4, 10, 12, 13 et 15 du système périodique des éléments,
- au moins une silice avec une surface BET de 50 à 300 m²/g ainsi que
- au moins une craie avec une surface BET de 10 à 25 m²/g et une taille de particule moyenne d50 de 10 à 1 000 nm.

2. Composition de silicone selon la revendication 1, **caractérisée en ce que** le polydiorganosiloxane est un polyorganodisiloxane à terminaison vinyle ou un polydiorganosiloxane **P** de formule (I), 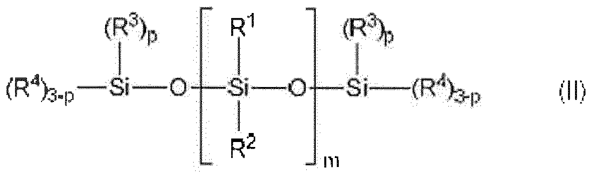 dans laquelle
les résidus R¹, R² et R³ indépendamment l'un de l'autre représentent des résidus hydrocarbonés monovalents linéaires ou ramifiés avec 1 à 12 atomes C, qui comprennent éventuellement un ou plusieurs hétéroatomes, qui comprennent éventuellement une ou plusieurs liaisons multiple C-C et/ou éventuellement des composants cycloaliphatiques et/ou aromatiques,
les résidus R⁴ indépendamment l'un de l'autre représentent des groupes hydroxyle ou alcoxy, des groupes acétyle ou cétoxime avec respectivement 1 à 13 atomes C, qui comprennent éventuellement un ou plusieurs hétéroatomes, et éventuellement une ou plusieurs liaisons multiples C-C et/ou éventuellement des composants cycloaliphatiques et/ou aromatiques,
l'indice p représente la valeur de 0, 1 ou 2 ; et l'indice m est choisi de telle manière que le polydiorganosiloxane **P** a une viscosité de 10 à 500000 MPa à une température de 23 °C.

3. Composition de silicone selon l'une des revendications précédentes, **caractérisée en ce que** le au moins un complexe est un complexe de bore, d'aluminium, d'antimoine, de bismuth, de titane, de zirconium ou de zinc.

4. Composition de silicone selon la revendication 3, **caractérisée en ce que** le complexe est un complexe de titane ou de zirconium.

5. Composition de silicone selon l'une des revendications précédentes, **caractérisée en ce que** le pourcentage du composé organotine et le au moins un complexe ensemble est de 0,005 à 7 pour cent en poids, basé sur la composition de silicone totale.

6. Composition de silicone selon l'une des revendications précédentes, **caractérisé en ce que** le rapport en poids du composé organotine au complexe est entre 1 : 10 et 100 : 1.

7. Composition de silicone selon l'une des revendications précédentes, **caractérisée en ce que** le pourcentage de l'au moins une silice a une surface BET de 50 à 300 m²/g de 1 à 35 % en poids, basé sur la composition en silicone totale.

8. Composition de silicone selon l'une des revendications précédentes, **caractérisée en ce que** le pourcentage de l'au moins une craie a une surface BET de 10 à 25 m²/g et une taille de particule moyenne d50 de 10 à 1000 nm de 1 à 50 pourcent en poids, basé sur la composition de silicone totale.

9. Composition de silicone selon l'une des revendications 1 à 8, **caractérisée en ce que** la composition est une composition de silicone à un seul composant.

10. Composition de silicone selon l'une des revendications 1 à 8, **caractérisée en ce que** la composition est une composition de silicone à deux composants constitués d'un composant **A**, comprenant
- l'au moins un polydiorganosiloxane durcissable par addition ou condensation avec une viscosité de 10 à 500000 MPa à une température de 23 °C,
- l'au moins une silice avec une surface BET de 50 à 300 m²/g, ainsi que
- l'au moins une craie avec une surface BET de 10 à 25 m²/g et une taille de particule moyenne d50 de 10 à 1000 nm ;
et un composant **B**, comprenant
- l'au moins un agent de durcissement pour le polydiorganosiloxane,
- l'au moins un composé organotine,
- l'au moins un complexe d'un élément choisi dans les groupes 4, 10, 12, 13 et 15 du système périodique des éléments.

11. Composition de silicone selon la revendication 10, **caractérisée en ce que** le rapport en poids du composant **A** au composant **B** est ≥ 1 : 1, en particulier de 3 : 1 à 15 : 1, de préférence de 10 : 1 à 13 : 1.

12. Utilisation d'une combinaison de matériau de charge, comprenant au moins une silice avec une surface BET de 50 à 300 m²/g ainsi qu'au moins une craie avec une surface BET de 10 à 25 m²/g et une taille de particule moyenne d50 de 1 à 1000 nm ; ensemble avec un catalyseur ou un système accélérateur comprenant au moins un composé organotine ainsi qu'au moins le complexe d'un élément choisi dans les groupes 4, 10, 12, 13 et 15 du système périodique des éléments, pour augmenter la résistance à la propagation de déchirure des compositions de silicone.

13. Utilisation de la composition de silicone selon l'une des revendications 1 à 11 comme adhésif, agent d'étanchéité, revêtement ou composé de versement.

14. Composition de silicone durcie que l'on peut obtenir à partir d'une composition de silicone à un seul composant selon la revendication 9, en particulier par réaction avec l'humidité, ou à partir d'une composition de silicone à deux composants selon la revendication 10 en mélangeant le composant **A** avec le composant **B**.
